# EUROPEAN PATENT SPECIFICATION

(11) **EP 0 945 209 B1**
(45) Date of publication and mention of the grant of the patent: **24.07.2002**
(21) Application number: 98105649.2
(22) Date of filing: 27.03.1998
(51) Int. Cl.: B23K 20/04, C23C 26/00, B32B 15/01, H01M 2/02

(54) **Battery can-forming plate and method of manufacturing the plate**
Blech für Batteriegehäuse und Verfahren zur Herstellung des Blechs
Tôle pour formation de boitiers de pile et méthode de fabrication de cette tôle

(43) Date of publication of application: 29.09.1999
(73) Proprietor: KATAYAMA SPECIAL INDUSTRIES, LTD., Osaka-shi, Osaka-fu (JP)
(72) Inventor: Sugikawa, Hirofumi, Toyonaka-shi, Osaka-fu (JP)
(74) Representative: TER MEER STEINMEISTER & PARTNER GbR

(56) References cited:
- EP-A- 0 406 688
- EP-A- 0 725 453
- EP-A- 0 741 424
- US-A- 5 603 782
- PATENT ABSTRACTS OF JAPAN vol. 012, no. 021 (M-661), 22 January 1988 & JP 62 179878 A (SUMITOMO METAL IND LTD), 7 August 1987,

## Description

### Technical Field of the Invention

The present invention relates to a battery can-forming plate, a method of manufacturing the battery can-forming plate, and a battery can formed of the battery can-forming plate. More particularly, the present invention relates to a plate to form various kinds of battery cans such as an alkali manganese battery, a lithium primary battery, lithium secondary battery, nickel cadmium battery, nickel hydrogen battery, and the like which are preferably used as the power source of cordless equipments, electric cars, and the like. A clad steel is used as the battery can-forming plate and made of not a steel plate but of metal such as nickel and nickel alloy formed on the surface of a steel plate to improve the battery characteristic by reducing the contact resistance at the inner surface of a battery can, enhance corrosion resistance and the appearance of the outer surface thereof, and reduce the cost of the battery can by reducing the number of manufacturing processes.

### Conventional Art

EP-A-0 406 688 discloses a method of manufacturing a titanium clad steel plate by inserting an Ni-Cr alloy material between alloy steel material and titanium material and hot-rolling a slab assembly formed by these materials.

Heretofore, a battery can is formed by subjecting a plate to a drawing processing such as a multi-drawing processing (transfer drawing processing) or DI (drawing and ironing) drawing processing. Generally, as the plate to form the battery can by such a drawing processing, a nickel-plated steel plate is used. The nickel-plated steel plate is manufactured by nickel plating an ordinary cold-rolled steel plate having a specified thickness. Otherwise, a method of nickel-plating the ordinary cold-rolled steel plate and then performing annealing and temper-rolling again is used or a method of nickel-plating unannealed cold-rolled steel plate and then performing annealing and temper-rolling is used to diffuse a steel plate and the nickel-plated layer so as to form an iron/nickel diffusion layer between the steel plate and the nickel-plated layer. In this manner, the nickel-plated steel plate having a specified thickness is manufactured.

However, because in the nickel-plated steel plate formed by directly nickel-plating the surface of the steel plate, the adhesiveness between the plated layer and the steel plate is not so favorable, the plated layer is incapable of following the deformation of the steel plate and thus may be separated from the steel plate depending on the shape. Further, because the nickel-plated layer is hard and frail, parts thereof not separated from the steel plate are likely to be cracked and further, pin holes are unavoidably formed even though the amount of the nickel-plated layer is increasingly formed. Thus, the conventional method has problems in processability and corrosion resistance.

In the nickel-plated steel plate manufactured by nickel-plating the ordinary cold-rolled steel plate or the non-annealed cold-rolled steel plate and annealing, temper-rolling, the metallurgically connected iron/nickel diffusion layer is formed on the interface between the steel plate and the nickel-plated layer. Thus, the adhesiveness of the plated layer to the steel plate can be enhanced and thus the corrosion resistance and processability of the nickel-plated steel plate can be improved. But in the case of the nickel-plated steel plate, after the steel plate is plated with a necessary amount of nickel, the iron/nickel diffusion layer is formed only in the interface between the steel plate and the nickel-plated layer by annealing treatment, with the nickel-plated layer present in the upper part thereof. Therefore, it is very difficult to make the thickness of the iron/nickel diffusion layer and that of the nickel-plated layer uniform, respectively.

That is, as the annealing treatment method, batch annealing method and continuous annealing method can be used. In the batch annealing method, the diffusion of iron/nickel starts earlier at the outside and upper side of a coil having high temperatures than at the inside and lower side thereof. Thus, the diffusion layer of the iron/nickel is thick at the portion having a high temperature and hence, the nickel-plated layer is thin, whereas the diffusion layer of the iron/nickel is thin at the portion having a low temperature and hence, the nickel-plated layer is thick. Accordingly, the thickness of the nickel-plated layer and that of the generated iron/nickel diffusion layer are necessarily nonuniform, respectively. In the continuous annealing method, heating is performed at a high temperature for a short period of time. Thus, the diffusion speed of the nickel-plated layer and that of the steel plate are fast for a short period of time, and the thickness of the diffusion layer of the iron/nickel cannot be controlled.

However, in the nickel-plated steel plate to form the battery can, it is indispensable to make the iron/nickel diffusion layer uniform in thickness. If the thickness of the iron/nickel diffusion layer is nonuniform, products manufactured in a subsequent processing such as a drawing processing have problems. That is, corrosion resistance is inferior in a part of the nickel-plated steel plate where the iron/nickel diffusion layer is thinner than a required thickness, whereas a part thereof where the iron/nickel diffusion layer is thicker than the required thickness is cracked and thus has a very low corrosion resistance.

In the battery can composed of this kind of nickel-plated steel plate, there is a case in which the iron/nickel diffusion layer and/or the nickel-plated layer having the same thickness or different thickness are required to be formed on both the outer and inner surfaces of the battery can. But because it is difficult to control the thickness of the iron/nickel diffusion layer by the above-described method, needless to say, it is difficult to form the iron/nickel diffusion layer and/or the nickel-plated layer having the same thickness or different thickness on both the outer and inner surfaces of the battery can.

Further, because the nickel-plated steel plate manufactured by the above-described conventional method is normally formed by performing dull plating on the surface of the steel plate and then forming the iron/nickel diffusion layer, the upper layer of the produced nickel-plated steel plate is not sufficiently bright. In particular, when an integrally top-attached battery can provided with a positive side is formed by drawing the nickel-plated steel plate, a drawn part has a high degree of processing and thus is not bright. The positive side of the battery can not appear bright and thus the product value of the battery is low.

Generally, in selecting a material of the battery can, the processability (drawing ability), corrosion resistance, and brightness thereof are important factors. The corrosion resistance and the brightness are important for the part of the battery can-forming plate corresponding to the outer surface of the peripheral wall of the battery can. Further, if the roughness degree of the inner surface of the peripheral wall of the battery can is fine, the inner surface of the peripheral wall which contacts a substance charged into the battery can is smooth and thus has a high contact resistance. As a result, the characteristic of the battery deteriorates. Therefore, the surface roughness degree is an important factor for the surface of the material corresponding to the inner surface of the peripheral wall of the battery can which affects the characteristic of the battery. That is, it is preferable to set the surface roughness degree of the inner surface of the peripheral wall of the battery can to be coarse to make the contact resistance low so that the battery has a preferable characteristic and allow the outer surface of the peripheral wall of the battery can to have a smooth bright surface so that the outer surface of the peripheral wall of the battery can has a high degree of corrosion resistance and a fine appearance.

The above-described processability (drawing property), the battery characteristic, the corrosion resistance, and the brightness are correlated with one another. Generally, if the drawing property of the material is favorable, the battery characteristic made of the material is unfavorable, whereas if the battery characteristic is favorable, the drawing property is unfavorable. For example, in a case where a nickel plated plate consisting of the steel plate, both surfaces of which are plated with nickel and the iron/nickel diffusion layer having a thickness of 5 - 6µm interposed between the nickel-plated surface and the steel plate is used, the side of the material to be formed as the inner surface of the battery can is cracked in the shape of a wedge at the time of drawing, because the iron/nickel diffusion layer becomes thick and hard. In this state, because the resistance generated as the contact between the side of the material to be formed as the inner surface of the battery can and filler which is charged into the battery can becomes low, the characteristic of the battery is favorable. However, the drawing property deteriorates greatly. For example, earring occurs at the end surface of the opening of the battery can. In addition, the corrosion resistance deteriorates as well if the diffusion layer at the side of the material to be formed as the outer surface of the peripheral wall of the battery can is thick, the drawn outer surface is likely to be cracked.

That is, it is preferable that in view of the battery characteristic, the side of the material to be formed as the inner surface of the battery can has a thick diffusion layer of 5 - 6µm and that in view of corrosion property, the side of the material to be formed as the outer surface of the battery can has a thin diffusion layer of 2 - 3µm. Further, it is preferable that the diffusion layers at both outer and inner sides are thin in view of the drawing property.

In order to solve the above-described problems, there is proposed a method. According to the method, after at least one of the upper and lower surfaces of a steel plate is thinly nickel-plated, the nickel-plated steel plate is annealed to compose an iron/nickel diffusion layer with all the plated nickel and having a uniform thickness on the surface of the steel plate. Then, temper-rolling is carried out, and nickel is plated on the iron/nickel diffusion layer (namely, nickel plating by any one of three methods selected from a method of carrying out only dull nickel plating, a method of carrying out bright nickel plating, and a method of carrying out bright nickel plating on dull nickel-plated layer) .

As described above, it is possible to form the iron/nickel diffusion layer having a uniform thickness and control the thickness of the iron/nickel diffusion layer as desired by thinly nickel-plating the steel plate, annealing the nickel-plated steel plate to compose the iron/nickel diffusion layer with all the nickel, and nickel-plating the iron/nickel diffusion layer. Further, because the iron/nickel diffusion layer having the uniform thickness is nickel-plated, the nickel-plated layer is allowed to have a uniform thickness as well. Thus, it is possible to manufacture the iron/nickel diffusion layer and the nickel-plated layer having the uniform thickness, respectively. Furthermore, because the thickness of the iron/nickel diffusion layer can be controlled as desired, it is possible to form the iron/nickel diffusion layers and the nickel-plated layers having the same thickness or different thicknesses on both the outer and inner surfaces of the steel plate.

Because the nickel-plated steel plate manufactured by the above method has the iron/nickel diffusion layer and the nickel-plated layer having the uniform thickness, respectively, there are no portions very thin or very thick in the iron/nickel diffusion layer. Therefore, there is no variations in its processability and corrosion resistance. Moreover, because it is possible to form the iron/nickel diffusion layers having different thicknesses on both the outer and inner surfaces of the steel plate, the battery characteristic can be improved by thickening the iron/nickel diffusion layer at the surface of the nickel-plated steel plate corresponding to the inner surface of the peripheral wall of the battery can and making the surface roughness of the iron/nickel diffusion layer large. Further, because the surface of the iron/nickel diffusion layer is nickel-plated, the nickel-plated layers having the same thickness or different thicknesses can be reliably formed on both the outer and inner surfaces of the steel plate. In addition, when the steel plate in bright nickel-plating is drawn, the brightness of the nickel-plated steel plate can be secured. In a result, all required quality such as processability, corrosion resistance, brightness, and battery characteristic can be improved.

However, in the above-described manufacturing method, it is necessary to carry out the primary plating to form the iron/nickel diffusion layer and the secondary plating which is performed after the iron/nickel diffusion layer is formed. That is, it is necessary to plate the steel plate at least twice. In particular, in forming the iron/nickel diffusion layers or the nickel-plated layers having different thicknesses, it is necessary to carry out plating three to five times because both the outer and inner surfaces are required to be plated individually. Further, in forming the surface to be formed as the outer surface of the peripheral wall of the battery can into the bright surface, it is necessary to perform plating at least three times. Thus, in order to manufacture the nickel-plated steel plate superior in corrosion resistance, processability, brightness, and battery characteristic, complicated and many processes are required, which causes the battery can to be very expensive.

Further, in various kinds of nickel-plated steel plates produced by the conventional manufacturing methods, a steel plate having a thickness equal to or almost equal to the size of a product is plated, annealed, temper-rolled or otherwise treated. Because the nickel-plated steel plates are thin, much time and labor are required. Thus, they are expensive. Further, it is necessary to manage plating liquid in the plating processes and drain it, which also causes the nickel-plated steel plates to be expensive.

Unlike the above-described plated battery can-forming plate, there is proposed a clad steel which is a combination of a base plate and a cladding plate consisting of such as a titanium plate or a nickel alloy plate united on the surface of the base plate. In this kind of clad steel, for a base plate having a thickness of about 100mm, a cladding plate having a thickness of 5mm - 30mm is used. The cladding plate-laminated plate is rolled to reduce the thickness of the base plate to about 20mm and that of the cladding plate to about 1mm - about 3mm. The minimum thickness of the base plate is about 10mm and that of the cladding plate is about 1mm.

The clad steel has an advantage over the plated plate because it is not necessary to manage plating liquid and drain it, but has a disadvantage because the extensibility of the steel plate is increasingly reduced as the thickness of a steel plate becomes thicker. Thus, the clad steel has a problem that unlike shallow draw goods such as pans or a kilns having large sizes and requiring low degrees of drawing, in forming a battery can having small sizes requiring a high degree of processability and bending, the thickness of the steel plate which is the base plate of the battery can-forming plate cannot be made to be too thick in view of tensile strength and elongation thereof. Therefore, if the thickness of the steel plate is 1mm or more, the steel plate lacks extensibility and hence, corners are cracked or a desired size cannot be obtained. That is, it is very difficult to form the battery can by drawing it.

In recent years, batteries are widely used for various kinds of cordless equipment such as personal computers, cellular telephones, and the like. In the portable equipment, the space occupied by batteries is very large. In order to make the portable equipment compact and light, it is necessary to provide them with batteries which are compact and light, and yet have a high performance. Thus, battery cans are required to have a high capacity. In order to allow batteries to have a high capacity, it is necessary to make the battery can thin because the outer shape thereof is specified by the international standard. But considering a yield strength and a strength high enough to withstand the internal pressure of the battery can, the thickness of the bottom wall of the battery can cannot be made to be thinner compared with the side wall. In particular, in the case of a secondary battery, if the bottom wall is thin, the inner and outer surfaces of the bottom wall is strained at the time of spot welding. Thus, the bottom wall is required to be so thick that it is not strained. In consideration of the above description, it is preferable that the thickness of the steel plate used to form the battery can is 0.4mm or less in the case of the multi-stage drawing method (transfer drawing method) which draws the thickness of the bottom wall and that of the side wall of the battery can to almost the same one; and 0.7mm or less in the case of the DI drawing method which draws the thickness of the side wall of the battery can thinner than that of the bottom wall thereof.

The thickness of the plating layer of the battery can-forming plate made of the nickel-plated steel plate is set to 5µm or less and normally as thin as 2µm - 3µm. The main purpose of plating steel plate is to prevent its surface from being rusted not to make the thickness of the nickel-plated layer large. Likewise, it is preferable to make the thickness of the cladding plate used in the clad steel to a possible smallest thickness to reduce the cost. Because the extensibility of metal other than the steel plate decreases as the thickness thereof becomes thicker, it is necessary to make the thickness of the cladding plate as small as possible.

When a metal plate such as a titanium plate, a nickel plate, a nickel alloy plate or the like is used as the cladding plate, it is difficult to draw the clad steel by the multi-stage drawing and almost impossible to draw it by the DI drawing if the thickness of the cladding plate is 10µm or more because the hardness of the cladding plate is higher than that of the steel plate. Therefore, the clad steel plate consisting of a base plate having a thickness of 10mm and a cladding plate having a thickness of 1mm cannot be used as the battery can-forming plate, because the thickness of the cladding steel plate is too large.

There is proposed an art of using a nickel/stainless-clad steel consisting of a thin stainless steel plate used as the base plate and a nickel foil used as the cladding plate as the electrode plate of a battery. However, because normally, the hardness Hv of the steel plate used for the battery can is 135 or less and the hardness Hv of stainless steel is as hard as 150 or more, the hardness of the nickel/stainless-clad steel causes a difficult problem about a drawing processability . If the nickel/stainless-clad plate is used not as an electrode plate but as a battery can-forming plate by means of drawing, it is unfavorable in follow-up property and likely to be cracked. Thus, it cannot be used as the battery can-forming plate. Even though the battery can can be formed of it without the problem of quality such as crack, the market price of the stainless steel plate is three to four times as high as that of the ordinary steel plate or that of the cold-rolled steel plate. Further, when the hardness of the nickel/stainless-clad steel is high, the drawing speed is slow and thus products comprising it are manufactured in a reduced number. Therefore, when the battery can is formed of the nickel/stainless-clad steel, the price of the formed battery can is very expensive.

### Summary of the Invention

The present invention has been made in view of the above-described problems, and it is an object of the present invention to provide a battery can-forming plate which has a low contact resistance at the inner side of a battery can, enhances the corrosion resistance and the appearance at the outer side of the battery can, allows the number of manufacturing processes to be reduced to reduce the cost, and comprises a clad steel consisting of a different metal such as nickel, nickel alloy or the like and having a thickness of 10µm or less and formed on a steel plate having a thickness of 0.01mm - 0.7mm; a method of manufacturing the battery can-forming plate; and a battery can formed of the battery can-forming plate.

Firstly, in the present invention, there is provided a battery can-forming plate comprised of a clad steel having a base plate and cladding plates on both surfaces of the base plate, wherein the base plate has a thickness of 0.01mm - 0.7mm; a thickness of the cladding plate is 10µm or less; and the each metal of the cladding plates is different from the metal of the base plate and also different from each other.

Secondly, there is provided a battery can-forming plate comprised of a clad steel having a base plate and cladding plates on both surfaces of the base plate, wherein the base plate has a thickness of 0.01mm - 0.7mm; a thickness of the cladding plate is 10µm or less; and the each metal of the cladding plates is different from the metal of the base plate but identical to each other.

Thirdly, there is provided a battery can-forming plate comprised of a clad steel having a base plate and a cladding plate on one surface of the base plate and a plated layer on the other surface, wherein the base plate has a thickness of 0.01mm - 0.7mm; and a thickness of the cladding plate is 10µm or less; and the metal of the cladding plate is different from the metal of the base plate.

Fourthly, there is provided a battery can-forming plate comprised of a clad steel having a base plate and a cladding plate on one surface of the base plate and a carbon-applied layer on the other surface, wherein the base plate has a thickness of 0.01mm - 0.7mm; and a thickness of the cladding plate is 10µm or less; and the metal of the cladding plate is different from the metal of the base plate.

As described above, in the first invention, the cladding plate laminated on one surface of the base plate is different from that laminated on the other surface thereof. In the second invention, the same cladding plate is laminated on each surface of the base plate. In the third invention, the plated layer is formed on the other surface of the base plate having the cladding plate laminated on one surface thereof. In the fourth invention, the carbon-applied layer is formed on the other surface of the base plate having the cladding plate laminated on one surface thereof.

In addition to the above-described four kinds of the battery can-forming plates, the battery can-forming plates have a plated layer on at least one surface of the cladding plate, further a carbon-applied layer on at least one surface of the cladding plate and furthermore a carbon-applied layer on at least one surface of the plated layer.

The cladding plate consists of nickel, nickel alloy, copper, copper alloy, silver, gold or titanium. In particular, during a process of forming a battery can, the cladding plate positioned on an outer surface of the battery can consists of nickel, and the cladding plate positioned on an inner surface of the battery can consists of nickel alloy.

Preferably, the plated layer consists of a metal selected from Au, Ag, Mo, Co, Ir, Rh, W, and Zn each having a low contact resistance. Further, preferably, the plated layer consists of a metal selected from C, Co, and Pd not easily oxidized; and an alloy selected from Ni-C, Ni-Mn, Ni-Co, Ni-B, Ni-Fe, Ni-Sn, Ni-Zn, Ni-Si, Ni-In, Ni-Ge, Ni-Se, Ni-La, Ni-W, Ni-Ti, Ni-P, Ni-Mo, Ni-Ga, Co-Mo, Fe-W, and Ag-Sn not easily oxidized.

There is provided a battery can made of the battery can-forming plate described above.

Further, in the present invention, there are provided methods of manufacturing a battery can-forming plate described above.

That is, there is provided a method of manufacturing a battery can-forming plate comprising the steps of: laminating a cladding plate of which a thickness is 1mm - 5mm consisting of a metal different from the metal of a continuously cast slab on at least one surface of the slab having a thickness of 200mm - 300mm; hot-rolling and drawing the slab laminated with the cladding plate to reduce the width thereof at 10% or less; winding the slab with the cladding plate while both edges thereof in a width direction thereof are being heated; and cold-rolling the slab with laminated with the cladding plate, whereby a clad steel comprised of a base plate made of the slab having a thickness of 0.01mm - 0.7mm and the cladding plate having a thickness of 10µm or less is manufactured.

The clad steel manufactured by the manufacturing methods includes the one laminated on only one surface of the base plate and the one laminated on both surfaces thereof. Further, there is a case in which the cladding plate consisting of the same metal is laminated on both surfaces of the base plate and a case in which the cladding plate laminated on one surface of the base plate is different from that laminated on the other surface thereof.

Further, there is provided a first method of manufacturing a battery can-forming plate comprising the steps of: providing two laminated plates by laminating cladding plates consisting of a metal different from the metal of a continuously cast slab on at least one surface of the slab; applying a separation material between the cladding plates of the laminated plates; hot-rolling the laminated plates at a predetermined ratio; cold-rolling the laminated plates at a predetermined ratio; and separating the laminated plates from each other at the separation material portion, whereby a clad steel comprised of a base plate consisting of the slab and having a thickness of 0.01mm - 0.7mm and the cladding plate having a thickness of 10µm or less is manufactured.

Further, there is provided a second method of manufacturing a battery can-forming plate comprising the steps of: providing two laminated plates by laminating a cladding plate consisting of a metal different from the metal of a continuously cast slab on at least one surface of the slab; applying carbon powders between the base plates of the laminated plates; hot-rolling the laminated plates at a predetermined ratio; cold-rolling the laminated plates at a predetermined ratio; and separating the laminated plates from each other at the carbon powders portion, whereby a clad steel comprised of the base plate consisting of the slab and having a thickness of 0.01mm - 0.7mm; the cladding plate on one surface of the base plate and having a thickness of 10µm or less; and the carbon powders applied to the other surface of the base plate.

Furthermore, there is provided a third method of manufacturing a battery can-forming plate comprising the steps of: providing two laminated plates by laminating cladding plates consisting of a metal different from the metal of a continuously cast slab on both surfaces of the slab; applying carbon powders between the cladding plates of the laminated plates; hot-rolling the laminated plates at a predetermined ratio; cold-rolling the laminated plates at a predetermined ratio; and separating the laminated plates from each other at the carbon powders portion, whereby a clad steel comprised of the base plate consisting of the slab and having a thickness of 0.01mm - 0.7mm; the cladding plate on each surface of the base plate and having a thickness of 10µm or less; and the carbon powders applied to the surface of one of the cladding plates.

The first method through the third method relate to a method of forming two battery can-forming plates in one-time manufacturing process. The second method and the third method are characterized in that the carbon-applied layer is utilized as the separation material for separating the two battery can-forming plates from each other.

A plated layer is coated on the surface of the cladding plate or/and the surface of the base plate by plating the surface of the cladding plate or/and the surface of the base plate after the laminated plates are cold-rolled. A carbon layer is coated on the surface of the plated layer by applying carbon to the surface of the plated layer after the plated layer is coated. That is, it is possible in subsequent processes to form the plated layer on the surface of the cladding plate or the surface of the base plate by plating the surface of the cladding plate or the surface of the base plate. Further, it is also possible in subsequent processes to form the carbon layer on the surface of the cladding plate or the surface of the base plate by applying carbon thereto. Furthermore, it is also possible in subsequent processes to form the carbon layer on the plated layer.

As described above, the battery can-forming plate of the present invention is manufactured by laminating a cladding plate having a thickness of 1mm - 5mm on a base plate consisting of a slab having a thickness of 200mm - 300mm, then hot rolling is carried out, and then, cold rolling is performed. The clad steel of the present invention thus manufactured is thinner than and superior to the conventional one in the deep-drawing characteristic. That is, during the hot rolling time, the width of the cladding plate-cladded base plate is reduced by 10% or less to prevent the cladding plates from separating from the base plate and prevent the generation of so-called edge drop which occurs when the thickness of both edges of the hot-rolled cladding plate-laminated base plate in the width direction thereof is reduced. The hot-rolled cladding plate-laminated base plate is wound in the shape of a coil by heating both edges thereof in its width direction so that the difference in the cooling speed at the center thereof in its width direction and that at both edges thereof in its width direction can be minimized. In this manner, the characteristic of the clad steel in its width direction can be allowed to be uniform. Consequently, it is possible to manufacture the clad steel plate thin and uniform in the thickness and metallic structure at the center and both edges thereof in its width direction. Thus, it is possible to reduce the in-plane anisotropy Δr which is the difference among the elongation percentage in its length direction, that in its width direction, and that in its oblique direction. Consequently, when the clad steel is drawn to form a cylindrical battery can, it is possible to prevent an ear-shaped projection from being formed partially, namely, the generation of so-called earring caused by a difference of the elongation percentage at the end of drawn parts, and thus the yield can be improved. In this manner, it is possible to manufacture the clad steel consisting of the base plate having a thickness of 0.01mm - 0.7mm and the cladding plate having a thickness of 10µm or less and suitable for a battery can-forming plate.

Although welding the cladding plate such as a nickel plate, a nickel alloy plate or the like to both surfaces of the slab used as base plate requires much process in manufacturing the clad steel, a diffusion layer formed between the base plate and the cladding plate by welding makes bond strength higher. Considering the high bond strength, it is possible to dispense with annealing to form the diffusion layer but the plated plate requires annealing. Therefore, it makes easy total management for the manufacturing process from the casting of the slab to the production of the clad steel. In particular, the clad steel takes advantages of being easily differentiated the metal layer on one surface of the base plate from the metal layer on the other surface thereof.

That is, it is required that a metal layer having a high degree of corrosion resistance and brightness is positioned on the outer surface of a battery can and that a metal layer having a low internal resistance of the battery is positioned on the inner surface thereof to improve the internal characteristic of the battery. Therefore, in the clad steel, metals such as pure nickel having a preferable corrosion resistance is used as the cladding plate to form the outer side of the battery can, while alloy such as Ni-Co alloy is used as the cladding plate to form the inner side of the battery can so as to prevent the metal positioned on the inner surface of the battery can from being easily oxidized by a substance contained in the battery can. In this manner, the internal characteristic of the battery is improved. In addition, the metal positioned on the inner surface of the battery can is allowed to have a low percentage of elongation by appropriately adjusting the proportion of metals of an alloy so as to crack the inner surface of the battery can and bring the inner surface thereof into the substance contained in the battery can closely. Consequently, the contact electric resistance can be reduced to improve the internal characteristic of the battery. In this case, it is possible to prevent the inner surface of the battery can from being easily oxidized by the substance contained in the battery can and allow the battery can to have a low contact electric resistance, by using alloy-plated metal as the inner surface of the battery can instead of the cladding plate consisting of alloy. But it is almost impossible to plate a steel plate with alloy consisting of two - three kinds of metals. Unlike the alloy plating, in the case of the cladding plate, about 10 alloys consisting of different combinations of metals can be used selectively. Thus, the clad steel is more favorable than the alloy-plated metal in improving the internal resistance of the battery. It is possible to allow the inner surface of the battery can to have a low contact electric resistance by providing the inner surface of the battery can with a plated layer consisting of a metal such as Au, Ag or the like having a low contact electric resistance or with a plated layer consisting of a metal such as C, Co or the like which is not easily oxidized.

. Currently, in battery makers, in order to improve the characteristic at the inner surface of the battery can, carbon is applied to the nickel-plated inner surface of the battery can to improve the adhesiveness of the nickel-plated inner surface to the substance contained in the battery can. In the present invention, because a carbon-applied layer can be formed in advance in manufacturing the battery can-forming plate, it is unnecessary for battery makers to perform a carbon-applying work. In particular, the carbon-applied layer can be formed very easily by applying carbon between two battery can-forming plate laminated one on the other as the separation material for separating them from each other.

### BRIEF DESCRIPTION OF THE DRAWINGS

Fig. 1 is a perspective view showing a battery can-forming plate of a first embodiment;
Fig. 2 is a flowchart showing the manufacturing process of the first embodiment;
Fig. 3A and 3B are schematic views each showing a state in the manufacturing process;
Figs. 4A through 4C are schematic views each showing a battery can processed from a battery can-forming plate of the first embodiment;
Figs. 5A through 5C are schematic views showing various examples of battery can-forming plates manufactured by the manufacturing method of the first embodiment;
Fig. 6A through 6D are schematic views each showing a manufacturing method of a second embodiment;
Figs. 7A through 7C are schematic views showing examples of battery can-forming plates manufactured by the manufacturing method of the second embodiment;
Fig. 8 is a flowchart showing the manufacturing process of a third embodiment; and
Figs. 9A through 9G are schematic views showing modifications of battery can-forming plates manufactured by the manufacturing method of the third embodiment;
Figs. 10A through 10G are schematic views showing modifications of battery can-forming plates having a carbon-applied layer formed on surfaces.

### Description of the Preferred Embodiment

The embodiments of the present invention will be described in detail with reference to drawings.

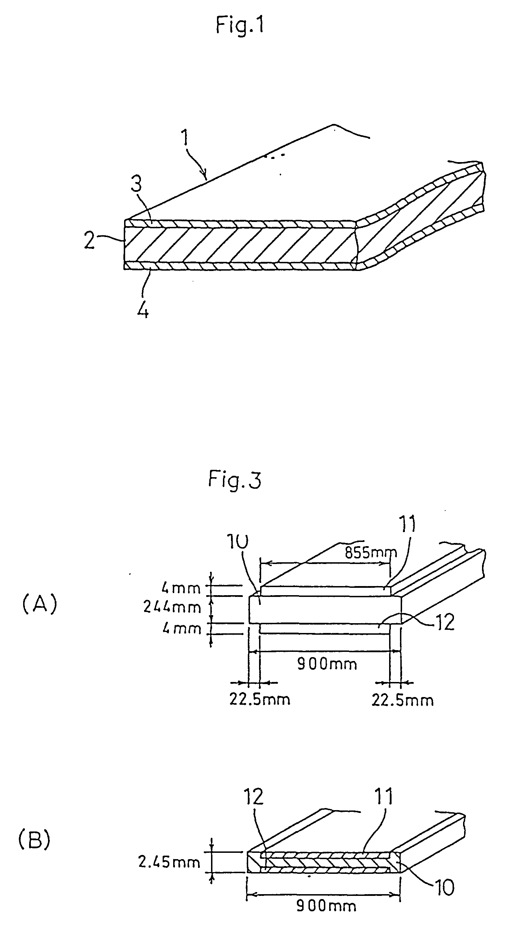

A battery can-forming plate 1 of a first embodiment shown in Fig. 1 consists of a cladding plate composed of a nickel plate 3 formed on one surface of a base plate 2 consisting of a steel plate and a nickel alloy plate 4 formed on the other surface thereof. The entire thickness of the battery can-forming plate 1 is 0.3mm. The thickness of the base plate 2 is 0.292mm. The thickness of the cladding nickel plate 3 and that of the cladding nickel alloy plate 4 are 0.004mm (4µm), respectively.

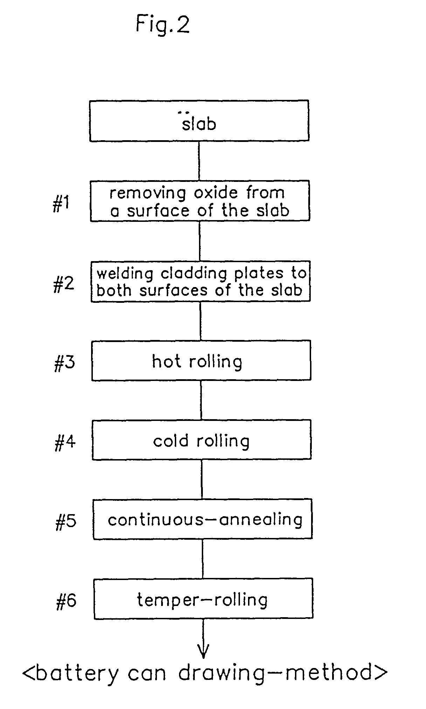

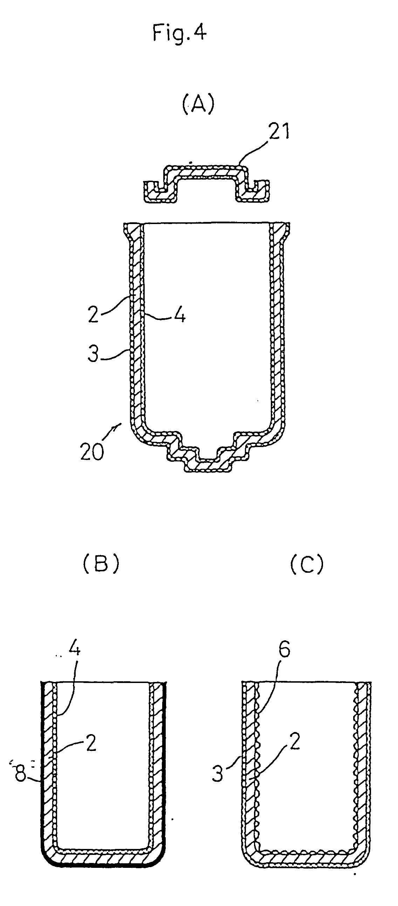

With reference to a flowchart shown in Fig. 2 and Fig. 3, the method of manufacturing the battery can-forming plate 1 of the first embodiment will be described below. At step #1, oxide is removed from the surface of a slab 10 formed by continuous casting and having a thickness of 250mm, a width of 900mm, and a length of 4.5m. In the oxide-removing operation, each surface of the slab 10 is ground by 1 - 5mm (in this embodiment, 3mm).

Then, at step #2, a cladding plate 11 consisting of a nickel plate having a thickness of 4mm is laminated on one surface of the slab 10, and a cladding plate 12 consisting of a nickel alloy plate having a thickness of 4mm is laminated on the other surface thereof. Then, the cladding plates 11 and 12 are welded to the slab 10. In this case, as shown in Fig. 3A, the width of each of the cladding plates 11 and 12 is set to 855mm smaller than that of the slab 10 which is 900mm, and the center of the slab 10 is made to be coincident with that of each of the cladding plates 11 and 12 to project both edges of the slab 10 in a small amount from both edges of the cladding plates 11 and 12 in the width direction of the slab 10.

Then, at step #3, the welded materials is hot-rolled at 1100°C in a heating oven to form a hot-rolled clad steel having the entire thickness (sum of thickness of the base plate and that of the cladding plates laminated on the base plate at both surfaces thereof) of 2.45mm and then, it is wound in the shape of a coil. During the hot-rolling period of time, as shown in Fig. 3B, the width of the clad steel being hot-rolled is reduced by 5% to prevent the cladding plates 11 and 12 from separating from the base plate 10 and prevent the generation of so-called edge drop which occurs when the thickness of both edges of the clad steel being hot-rolled in the width direction thereof is reduced. The hot-rolled clad steel is wound in the shape of a coil by heating both edges of the material at 700°C by a heating means consisting of an electric heater provided at both edges thereof in its width direction so that the difference in the cooling speed at the center thereof in its width direction and that at both edges thereof in its width direction can be minimized. In this manner, the characteristic of the hot-rolled clad steel in its width direction can be allowed to be uniform.

Thereafter, after the hot-rolled clad steel is washed with a solution containing an acidic substance, it is cold-rolled at step #4. The rolling percentage in the cold rolling is set to 87.6 to adjust the entire thickness of the cold-rolled clad steel to 0.305mm.

After the cold-rolled clad steel was washed electrolytically, at step #5, it is continuously annealed at 600°C - 900°C for 0.5 minutes to 2.0 minutes. In this embodiment, it is continuously annealed at 750°C for one minute.

Finally, at step #6, the cladding material is temper-rolled at a rolling percentage of 1.2% to obtain the battery can-forming plate 1 having a thickness of 0.3mm. The thickness of the cladding plate 3 consisting of the nickel plate and that of the cladding plate 4 consisting of the nickel alloy plate are 0.004mm (4µm), respectively.

The battery can-forming plate 1 was formed as a cylindrical battery can by transfer drawing method or drawing and ironing method. As a result, the battery can-forming plate 1 had almost the same degree of elongation as that of the conventional nickel-plated battery can-forming plate and could be processed without the battery can-forming plate 1 being cracked. In this case, as shown in Fig. 4A, the outer side of a battery can 20 was formed of a cladding plate 3 consisting of a nickel plate and the inner side thereof was formed of a cladding plate 4 consisting of a nickel alloy plate. The battery can 20 had a higher degree of corrosion resistance and internal battery characteristic than those of the conventional nickel-plated battery can.

Because in the hot rolling, the width of the cladding material is reduced to prevent the generation of the edge drop, the battery can-forming plate 1 can have uniform in the thickness and metallic structure at the center and those at both edges in its width direction. Thus, it is possible to reduce the in-plane anisotropy Δr which is the difference among the elongation percentage in its length direction, that in its width direction, and that in its oblique direction. Consequently, when the cladding plate is drawn to form a cylindrical battery can, it is possible to prevent an ear-shaped projection from being formed partially, namely, the earring generates because the.elongation percentage at the end of the steel plate is not different from that of other portions thereof, and thus the yield can be improved.

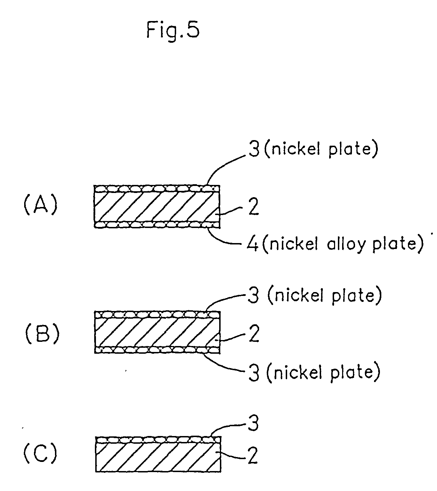

As shown in Fig. 5A, in the clad steel which composes the battery can-forming plate of the first embodiment, both surfaces of its base plate 2 is provided with the cladding plates 3 and 4 consisting of metals (nickel plate and nickel alloy plate) different from the metal of the base plate 2 and different from each other. But as shown in Fig. 5B, it is possible to compose the cladding plates 3 and 4 at both sides of the clad steel of the same metal plates, for example, nickel plates. Further, as shown in Fig. 5C, it is possible to form the clad steel having the cladding plate 3 formed at only one surface of the base plate 2. In the case of the cladding plate shown in Fig. 5C, frequently, the other surface on which no cladding plate is laminated is provided with a plated layer or a carbon-applied layer. In the schematic views showing the battery can-forming plate, the base plate 2 is shown by oblique lines, the cladding plates 3 and 4 are shown by cross oblique lines, the carbon-applied layer 6 which will be described later is shown by waveform-shaped lines, and the plated layer 8 is shown by solid black.

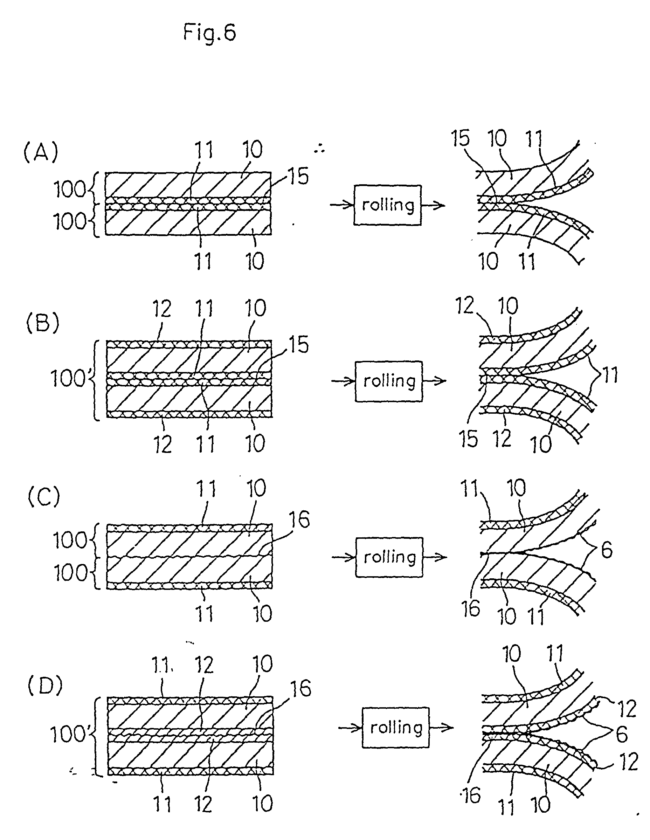

The manufacturing method of the first embodiment relates to a method of manufacturing one battery can-forming plate consisting of the clad steel. As shown in Figs. 6A through 6D, in the second embodiment, two battery can-forming plates composed of clad steels are manufactured simultaneously.

That is, in Fig. 6A, a cladding plate 11 is laminated on one surface of a slab 10 by welding, and no cladding plate is laminated on the other surface thereof. Two laminated plates 100 consisting of the slab 10 and the cladding plate 11 are provided, and separation materials 15 are interposed between the cladding plates 11. In this state, similarly to the first embodiment, hot rolling, cold rolling, and temper-rolling are carried out. Then, the two laminated plates 100 are separated from each other at the center of the separation plates 15 to form two clad steel plates each consisting of the base plate having a thickness of 0.01mm - 0.7mm and the cladding plate 11 having a thickness of 10µm or less. It is preferable to plate the exposed surface, on which the cladding plate 11 is not laminated, as will be described later to form the battery can-forming plate. That is, it is preferable to laminate the cladding plate 11 consisting of a nickel plate on one surface of the slab 10 and plate the other iron surface of the slab 10 with nickel alloy, silver or the like.

Referring to Fig. 6B, a laminated plate 100' consisting of two laminated plates; each laminated plate having the cladding plate 11 welded to one surface of the slab 10 and the cladding plate 12 welded to the another surface thereof, is provided. Separation materials 15 are interposed between the cladding plates 11. In this state, similarly to the case shown in Fig. 6A, after required rolling is performed, the laminated plate 100' is separated from each other at the center of the separation materials 15 to form two clad steel plates simultaneously.

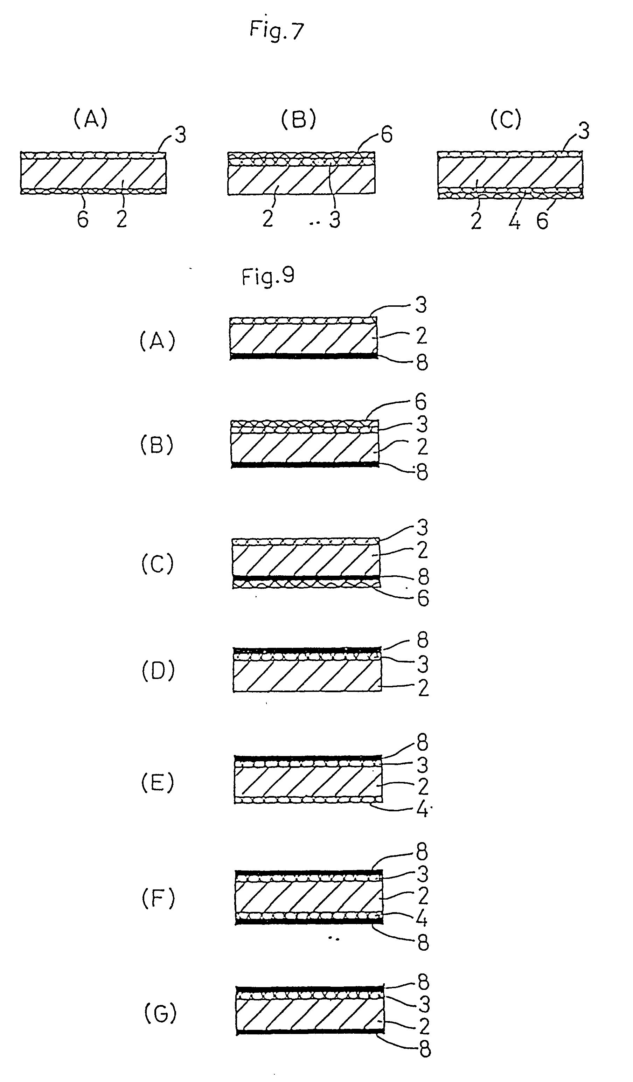

Referring to Fig. 6C, the cladding plate 11 is laminated on one surface of the slab 10 by welding, and the cladding plate is not laminated on the other surface thereof. Two laminated plates 100 comprising the cladding plate 11 consisting of a nickel plate and the like are provided, and carbon powders 16 are applied between the slabs 10 and interposed as a separation material. After required rolling is performed, the two laminated plates 100 are separated from each other at the carbon-applied portion positioned between the slabs 10. As a result, for example, it is possible to simultaneously manufacture two battery can-forming plate 1 consisting of a nickel plate 3 formed on one surface of the base plate 2 shown in Fig. 7A and a carbon-applied layer 6 formed on the other surface thereof. It is possible to simultaneously manufacture two clad steels having a construction shown in Fig. 7B by laminating the laminated plates 100 between the cladding plates 11 through a separation material consisting of carbon powder and rolling them and then separating them from each other.

Referring to Fig. 6D, a laminated plate 100' consisting of two laminated plates; each laminated plate having the cladding plate 11 made of a nickel plate and the like welded to one surface of the slab 10 and the cladding plate 12 made of a nickel alloy plate and the like welded to another surface of the slab 10, is provided. Carbon powders 16 are applied between the cladding plates 12 of the laminated plate 100' as a separation material. After required rolling is performed, the the laminated plate 100' is separated from each other at the carbon-applied portion positioned between the cladding plates 12. It is possible to simultaneously manufacture two battery can-forming plates 1 each having the nickel plate 3 as an example formed on one surface of the base plate 2, the nickel alloy plate 4 formed on the other surface thereof, and a carbon-applied layer 6 formed on the surface of the nickel alloy plate 4, as shown in Fig. 7C.

As described above, when two laminated plates comprising a cladding plate or cladding plates laminated on the base plate are formed and laminated one on the other through the separation material, then the two laminated plates are rolled it is possible to simultaneously manufacture the two battery can-forming plate having the carbon-applied layer formed on one surface thereof respectively, thus enhance the productivity and also eliminate the process of applying carbon powders on the surface, of the battery can-forming plate, corresponding to the inner surface of battery can in a subsequent process.

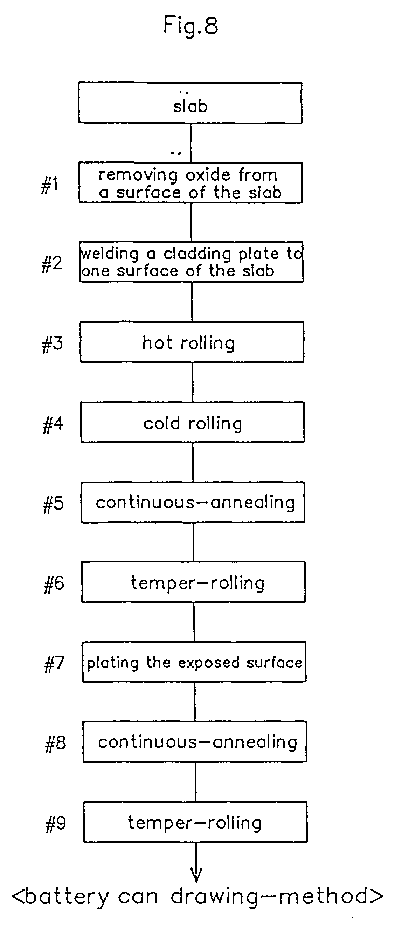

The flowchart shown in Fig. 8 shows a third embodiment of the present invention. At step #2, a cladding plate 11 is welded to only one surface of a slab 10 and a cladding plate is not laminated on the other surface thereof. Similarly to the first embodiment, at step #3, the laminated plate is hot-rolled; at step #4, it is cold-rolled; at step #5, it is continuously annealed; at step #6, temper-rolling is performed; and at step #7, the exposed surface, of the base plate 10, on which the cladding plate 11 is not laminated is plated. After two battery can-forming plates are simultaneously manufactured by the method shown in Fig. 6A from step #1 to step #6, they are separated from each other at the center of the separation material, and then, needless to say, the exposed surface of the base plate 10 may be plated.

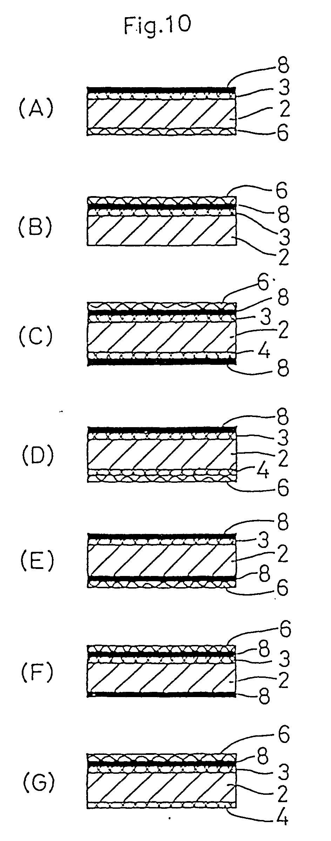

After the exposed surface of the base plate 10 is plated, continuous annealing is performed at step #8. Then, at step #9, temper-rolling is performed again to manufacture a battery can-forming plate consisting of the base plate 2 made of a steel plate and having a thickness of 0.01mm - 0.7mm shown in Fig. 9A, the cladding plate 3 consisting of a metal plate different from the metal of the base plate 2 and having a thickness of 10µm or less and laminated on one surface of the base plate 2, and the plated layer 8 formed on the other surface thereof.

Figs. 9B through 9G show modifications of the battery can-forming plate, of the third embodiment, having a plated layer formed on at least one surface of the clad steel. A battery can-forming plate shown in Fig. 9B consists of the base plate 2, a plated layer 8 formed on one surface thereof, and the cladding plate 3 formed on the other surface thereof, and a carbon-applied layer 6 formed by applying carbon to the surface of the cladding plate 3. A battery can-forming plate shown in Fig. 9C consists of the base plate 2, the plated layer 8 formed on one surface thereof, the cladding plate 3 formed on the other surface thereof, the carbon-applied layer 6 formed on the surface of the plated layer 8. A battery can-forming plate shown in Fig. 9D consists of the cladding plate 3 formed on one surface of the base plate 2 and the plated layer 8 formed on the cladding plate 3. The other surface of the base plate 2 is exposed to the outside. A battery can-forming plate shown in Fig. 9E consists of cladding plates 3 and 4 of the same or different kind of metal and formed on both surfaces of the base plate 2 and the plated layer 8 formed on the surface of the cladding plate 3. A battery can-forming plate shown in Fig. 9F consists of the plated layers 8 formed on the surface of both the cladding plates 3 and 4. A battery can-forming plate shown in Fig. 9G consists of the cladding plate 3 formed on the base plate 2, the plated layer 8 formed on the surface of the cladding plate 3, and the plated layer 8 formed on the other surface of the base plate 2. As shown in Fig. 4B, it is preferable that when the battery can-forming plate is processed into a battery can, the nickel-plated layer 8 is positioned on the outer surface of the battery can 20 and the cladding plate 4 consisting of alloy is positioned on the inner surface thereof.

It is preferable that the inner surface of the battery can is plated with metals such as Au, Ag, Mo, Co, Ir, Rh, W, and Zn having low electric resistances; and/or metals such as C, Co, Pd not easily oxidized; and alloy metals such as Ni-C and Ni-Co. It is preferable that the surface, of the battery can-forming plate, corresponding to the outer surface of a battery can has a high degree of corrosion resistance and is plated brightly. For example, it is preferable to brightly nickel-plate on a dull nickel-plated layer.

As shown in Figs. 6C and 6D, when two battery can-forming plates are manufactured simultaneously, it is preferable to form the carbon-applied layer 6 therebetween as the separation material. But needless to say, in addition to forming the carbon-applied layer 6 as the separation material, carbon powder may be applied to the surface of a single clad steel plate.

It is possible to manufacture the battery can-forming plate formed by combining the base plate 2, the cladding plate 3, the plated layer 8, and the carbon-applied layer 6 in various modes as shown in Figs. 10A through 10G by the methods shown in Figs. 6C and 6D or forming the carbon-applied layer 6 in a subsequent process. In forming a battery can of the battery can-forming plate having the carbon-applied layer 6 formed on at least one surface thereof, it is preferable the carbon-applied layer 6 is positioned at the inner side of the battery can 20 and the cladding plate 3 is positioned at the outer side thereof.

The above-described battery can-forming plate can be preferably used as materials of the terminal of positive and negative electrodes and needless to say, as materials for forming battery component parts, for example, electricity-collecting members, lead terminals, washers, rings, explosion-proof valves, and the like.

As apparent from the foregoing description, according to the present invention, after the cladding plate having a thickness of 1mm - 5mm is cladded on the base plate consisting of a slab having a thickness of 200mm - 300mm, the cladding plate-laminated base plate is hot-rolled by reducing the width thereof by 10% or less, the hot-rolled cladding plate-laminated base plate is wound in the shape of coil by heating both edges thereof in its width direction, and it is cold-rolled. Therefore, it is possible to manufacture the thin clad steel plate consisting of the base plate having a thickness of 0.01mm - 0.7mm and the cladding plate having a thickness of 10µm or less and having superior deep-draw characteristic, which allows a material formed of the clad steel plate to be used as the battery can-forming plate. That is, it is possible to manufacture the thin clad steel plate having a good elongation and uniformity in the thickness and metallic structure at the center and both edges thereof in its width direction. Thus, it is possible to reduce the in-plane anisotropy Δr which is the difference among the elongation percentage in its length direction, that in its width direction, and that in its oblique direction. Consequently, when the cladding steel plate is drawn to form a cylindrical battery can, the cladding plate can follow the elongation of the base plate. Thus, in forming the battery can by drawing the battery can-forming plate, there are no problems that crack, earring occurs, and a desired size cannot be obtained. Further, the number of the manufacturing processes is much smaller in using the clad steel plate as the battery can-forming plate than that of the manufacturing processes in using the conventional plated plate such as nickel-plated steel plate as the battery can-forming plate. Accordingly, it is possible to manufacture the battery can-forming plate superior in corrosion resistance, processability, brightness, and internal battery characteristic easily and at a low cost. Thus, the present invention provides the battery can-forming plate at a low cost.

Further, it is almost impossible to plate a steel plate with alloy consisting of two - three kinds of metals. The kind of metal, the number of metals which can be mixed with each other, and mixing ratio of metals in forming an alloy are limited. Unlike the alloy plating, when an alloy plate is used as the cladding plate of the clad steel, about 10 alloys can be used selectively in different mixing proportions. Thus, there is hardly a limitation in the kind, number, and mixing proportion, and the cladding plate formed of an appropriate alloy can be selectively used in view of the performance and price of a battery.

The characteristic requested for the outer side of the battery can is different from that requested for the inner side thereof. In the clad steel, because the metal composing the cladding plate to be formed on one surface of the base plate is different from the metal composing the cladding plate to be formed on the other surface thereof, the above request can be easily satisfied.

## Claims

1. A battery can-forming plate comprised of a clad steel having a base plate (2) and cladding plates (3, 4) on both surfaces of the base plate, wherein the base plate has a thickness of 0.01mm - 0.7mm; the thickness of the cladding plate is 10µm or less; and the metals of the cladding plates are different from the metal of the base plate and also different from each other.

2. A battery can-forming plate comprised of a clad steel having a base plate (1) and cladding plates (3) on both surfaces of the base plate, wherein the base plate has a thickness of 0.01mm - 0.7mm; the thickness of the cladding plate is 10µm or less; and the metals of the cladding plates are different from the metal of the base plate but identical with each other.

3. A battery can-forming plate comprised of a clad steel having a base plate (1) and a cladding plate (3) on one surface of the base plate and a plated layer (8) on the other surface, wherein the base plate has a thickness of 0.01mm - 0.7mm; the thickness of the cladding plate is 10µm or less; and the metal of the cladding plate is different from the metal of the base plate.

4. A battery can-forming plate comprised of a clad steel having a base plate (1) and a cladding plate (3) on one surface of the base plate and a carbon-applied layer (6) on the other surface, wherein the base plate has a thickness of 0.01mm - 0.7mm; the thickness of the cladding plate is 10µm or less; and the metal of the cladding plate is different from the metal of the base plate.

5. The battery can-forming plate according to any one of claims 1 through 4 which has a plated layer (8) on at least one surface of the cladding plate (3).

6. The battery can-forming plate according to any one of claims 1 through 5 which has a carbon-applied layer (6) on at least one surface of the cladding plate (3).

7. The battery can-forming plate, according to claim 3 or 5, having a carbon-applied layer (6) on at least one surface of the plated layer (8).

8. The battery can-forming plate according to any one of claims 1 through 7, wherein the cladding plate (3, 4) consists of nickel, nickel alloy, copper, copper alloy, silver, gold or titanium.

9. The battery can-forming plate according to claim 8, wherein during a process of forming a battery can (20), the cladding plate (3) positioned on an outer surface of the battery can consists of nickel, and the cladding plate (4) positioned on an inner surface of the battery can consists of nickel alloy.

10. The battery can-forming plate according to any one of claims 3, 5, 6, 7, 8, and 9, wherein the plated layer (8) consists of a metal selected from Au, Ag, Mo, Co. Ir, Rh, W, and Zn each having a low contact resistance.

11. The battery can-forming plate according to any one of claims 3, 5, 6, 7, 8, and 9, wherein the plated layer (8) consists of a metal selected from C, Co, and Pd not easily oxidized; and/or an alloy selected from Ni-C, Ni-Mn, Ni-Co, Ni-B, Ni-Fe, Ni-Sn, Ni-Zn, Ni-Si, Ni-In, Ni-Ge, Ni-Se, Ni-La, Ni-W, Ni-Ti, Ni-P, Ni-Mo, Ni-Ga, Co-Mo, Fe-W, and Ag-Sn not easily oxidized.

12. A battery can made of the battery can-forming plate described any one of claims 1 through 11

13. A method of manufacturing a battery can-forming plate (1) comprising the steps of:
- laminating a cladding plate (3, 4; 11, 12) with a thickness of 1mm - 5mm consisting of a metal different from the metal of a continuously cast slab (10) on at least one surface of the slab having a thickness of 200mm - 300mm;
- hot-rolling and drawing the slab laminated with the cladding plate to reduce the width thereof by 10% or less;
- winding the slab laminated with the cladding plate while both lateral edges thereof are being heated; and
- cold-rolling the slab laminated with the cladding plate, whereby a clad steel comprised of a base plate made of the slab having a thickness of 0.01mm - 0.7mm and the cladding plate having a thickness of 10µm or less is manufactured.

14. A method of manufacturing a battery can-forming plate (1) comprising the steps of:
- providing two laminated plates (100; 100') by laminating cladding plates (11, 12) consisting of a metal different from the metal of a continuously cast slab (10) on at least one surface of the slab;
- applying a separation material (15; 16) between the cladding plates (11, 12) of the laminated plates;
- hot-rolling the laminated plates at a predetermined ratio;
- cold-rolling the laminated plates at a predetermined ratio; and
- separating the laminated plates from each other at the separation material portion,
- whereby a clad steel comprised of a base plate consisting of the slab and having a thickness of 0.01mm - 0.7mm and the cladding plate having a thickness of 10µm or less is manufactured.

15. The method of manufacturing a battery can-forming plate (1) according to claim 14, wherein the cladding plates (11, 12) are laminated on both surfaces of the slab (10), and the separation material is carbon powder (16), whereby a clad steel comprised of the base plate (10), the cladding plates (11, 12) provided on each surface of the base plate, and the carbon powders (16) applied to the surface of one of the cladding plates is manufactured.

16. A method of manufacturing a battery can-forming plate (1) comprising the steps of:
- providing two laminated plates (100) by laminating a cladding plate (11) consisting of a metal different from the metal of a continuously cast slab (10) on at least one surface of the slab;
- applying carbon powders (16) between the base plates (10) of the laminated plates;
- hot-rolling the laminated plates at a predetermined ratio;
- cold-rolling the laminated plates at a predetermined ratio; and
- separating the laminated plates from each other at the carbon powder portion,
- whereby a clad steel comprised of the base plate (10) consisting of the slab and having a thickness of 0.01mm - 0.7mm, the cladding plate (11) on one surface of the base plate and having a thickness of 10µm or less and the carbon powders (16) applied to the other surface of the base plate is manufactured.

17. The method of manufacturing the battery can-forming plate according to any one of claims 13 through 16, wherein a plated layer (8) is coated on the surface of the cladding plate (11, 12) or/and the surface of the base plate (10) by plating after the laminated plates are cold-rolled.

18. The method of manufacturing the battery can-forming plate according to claim 17, wherein a carbon layer (6) is coated on the surface of the plated layer (8) by applying carbon to the surface of the plated layer after the plated layer is coated.

## Patentansprüche

1. Blech für Batteriegehäuse, bestehend aus einem mehrlagigen Stahl mit einem Grundblech (2) und Beschichtungsblechen (3, 4) auf beiden Seiten des Grundbleches, wobei das Grundblech eine Dicke von 0,01 mm - 0,7 mm hat, die Dicke des Beschichtungsbleches 10 µm oder weniger beträgt und die Metalle der Beschichtungsbleche von dem Metall des Grundbleches und auch voneinander verschieden sind.

2. Blech für Batteriegehäuse, bestehend aus einem mehrlagigen Stahl mit einem Grundblech (1) und Beschichtungsblechen (3) auf beiden Oberflächen des Grundbleches, wobei das Grundblech eine Dicke von 0,01 mm - 0,7 mm hat, die Dicke des Beschichtungsbleches 10 µm oder weniger beträgt und die Metalle der Beschichtungsbleche von dem Metall des Grundbleches verschieden aber untereinander gleich sind.

3. Blech für Batteriegehäuse, bestehend aus einem mehrlagigen Stahl mit einem Grundblech (1) und einem Beschichtungsblech (3) auf einer Oberfläche des Grundbleches und einer Plattierungsschicht (8) auf der anderen Oberfläche, wobei das Grundblech eine Dicke von 0,01 mm - 0,7 mm hat, die Dicke des Beschichtungsbleches 10 µm oder weniger beträgt und das Metall des Beschichtungsbleches von dem Metall des Grundbleches verschieden ist.

4. Blech für Batteriegehäuse, bestehend aus einem mehrlagigen Stahl mit einem Grundblech (1) und einem Beschichtungsblech (3) auf einer Oberfläche des Grundbleches und einer kohlehaltigen Schicht (6) auf der anderen Oberfläche, wobei das Grundblech eine Dicke von 0,01 mm - 0,7 mm hat, die Dicke des Grundbleches 10 µm oder weniger beträgt und das Metall des Beschichtungsbleches von dem Metall des Grundbleches verschieden ist.

5. Blech für Batteriegehäuse nach einem der Ansprüche 1 bis 4, mit einer Plattierungsschicht (8) auf wenigstens einer Oberfläche des Beschichtungsbleches (3).

6. Blech für Batteriegehäuse nach einem der Ansprüche 1 bis 5, mit einer kohlehaltigen Schicht (6) auf wenigstens einer Oberfläche des Beschichtungsbleches (3).

7. Blech für Batteriegehäuse nach Anspruch 3 oder 5, mit einer kohlehaltigen Schicht (6) auf wenigstens einer Oberfläche der Plattierungsschicht (8).

8. Blech für Batteriegehäuse nach einem der Ansprüche 1 bis 7, bei dem die Beschichtungsbleche (3, 4) aus Nickel, Nickellegierung, Kupfer, Kupferlegierung, Silber, Gold oder Titan bestehen.

9. Blech für Batteriegehäuse nach Anspruch 8, bei dem das Beschichtungsblech (3), das sich bei der Herstellung des Batteriegehäuses (20) auf der Außenseite befindet, aus Nickel besteht und das Beschichtungsblech (4) auf der inneren Oberfläche des Batteriegehäuses aus einer Nickellegierung besteht.

10. Blech für Batteriegehäuse nach einem der Ansprüche 3, 5, 6, 7, 8 und 9, bei dem Plattierungsschicht (8) aus einem Metall besteht, das ausgewählt ist unter Au, Ag, Mo, Co, Ir, Rh, W und Zn und jeweils einen niedrigen Kontaktwiderstand hat.

11. Blech für Batteriegehäuse nach einem der Ansprüche 3, 5, 6, 7, 8 und 9, bei dem die Plattierungsschicht (8) aus einem Metall besteht, das ausgewählt ist unter C, Co und Pd, das schwer oxidierbar ist, und/oder aus einer Legierung besteht, die ausgewählt ist unter Ni-C, Ni-Mn, Ni-Co, Ni-B, Ni-Fe, Ni-Sn, Ni-Zn, Ni-Si, Ni-In, Ni-Ge, Ni-Se, Ni-La, Ni-W, Ni-Ti, Ni-P, Ni-Mo, Ni-Ga, Co-Mo, Fe-W und Ag-Sn, die schwer oxidierbar ist.

12. Batteriegehäuse aus dem Blech nach einem der Ansprüche 1 bis 11.

13. Verfahren zur Herstellung eines Bleches (1) für ein Batteriegehäuse, mit den Schritten:
- Auflaminieren eines Beschichtungsbleches (3, 4; 11, 12) mit einer Dicke von 1 mm - 5 mm, die aus einem von dem Metall einer kontinuierlich gegossenen Bramme (10) verschiedenen Metall besteht, auf wenigstens eine Oberfläche der Bramme, die eine Dicke von 200 mm - 300 mm hat,
- Warmwalzen und Strecken der mit dem Beschichtungsblech beschichteten Bramme, um deren Breite um 10% oder weniger zu reduzieren,
- Aufwickeln der mit dem Beschichtungsblech beschichteten Bramme, während beide seitliche Ränder derselben beheizt werden, und
- Kaltwalzen der mit dem Beschichtungsblech beschichteten Bramme, wobei ein mehrlagiger Stahl hergestellt wird, der besteht aus einem durch die Bramme gebildeten Grundblech mit einer Dicke von 0,01 mm - 0,7 mm und dem Beschichtungsblech mit einer Dicke von 10 µm oder weniger.

14. Verfahren zur Herstellung eines Bleches (1) für ein Batteriegehäuse, mit den Schritten:
- Herstellen von zwei Schichtblechen (100; 100') durch Auflaminieren von Beschichtungsblechen (11, 12), die aus einem von dem Metall einer kontinuierlich gegossenen Bramme (10) verschiedenen Metall bestehen, auf wenigstens eine Oberfläche der Bramme,
- Anbringen eines Trennmaterials (15; 16) zwischen den Beschichtungsblechen (11, 12) der Schichtbleche,
- Warmwalzen der Schichtbleche mit einem vorbestimmten Verhältnis,
- Kaltwalzen der Schichtbleche mit einem vorbestimmten Verhältnis und
- Trennen der Schichtbleche voneinander an der Stelle des Trennmaterials,
- wobei ein mehrlagiger Stahl hergestellt wird, der besteht aus einem durch die Bramme gebildeten Grundblech mit einer Dicke von 0,01 mm - 0,7 mm und dem Beschichtungsblech mit einer Dicke von 10 µm oder weniger.

15. Verfahren nach Anspruch 14 zur Herstellung eines Bleches (1) für ein Batteriegehäuse, bei dem die Beschichtungsbleche (11, 12) auf beide Oberflächen der Bramme (10) auflaminiert werden und das Trennmaterial Kohlepulver (16) ist, wodurch ein mehrlagiger Stahl hergestellt wird, der aus dem Grundblech (10), den auf jeder Oberfläche des Grundbleches angebrachten Beschichtungsblechen (11, 12) und dem auf der Oberfläche eines der Beschichtungsbleche angebrachten Kohlepulver (16) besteht.

16. Verfahren zur Herstellung eines Bleches (1) für ein Batteriegehäuse, mit den Schritten:
- Herstellen zweier Schichtbleche (100) durch Auflaminieren eines Beschichtungsbleches (11), das aus einem von dem Metall einer kontinuierlich gegossenen Bramme (10) verschiedenen Metall besteht, auf wenigstens eine Oberfläche der Bramme,
- Anbringen von Kohlepulver (16) zwischen den Grundblechen (10) der Schichtbleche,
- Warmwalzen der Schichtbleche mit einem vorbestimmten Verhältnis,
- Kaltwalzen der Schichtbleche mit einem vorbestimmten Verhältnis und
- Trennen der Schichtbleche voneinander an der Stelle des Kohlepulvers,
- wodurch ein mehrlagiger Stahl hergestellt wird, der besteht aus dem Grundblech (10), das durch die Bramme gebildet wird und eine Dicke von 0,01 mm - 0.7 mm hat, dem Beschichtungsblech (11) auf einer Oberfläche des Grundbleches, mit einer Dicke von 10 µm oder weniger, und dem auf der anderen Oberfläche des Grundbleches angebrachten Kohlepulver (16).

17. Verfahren nach einem der Ansprüche 13 bis 16 zur Herstellung des Bleches für ein Batteriegehäuse, bei dem eine Plattierungsschicht (8) auf die Oberfläche des Beschichtungsbleches (11, 12) und/oder die Oberfläche des Grundbleches (10) aufgebracht wird, indem die Schichtbleche nach dem Kaltwalzen plattiert werden.

18. Verfahren nach Anspruch 17 zur Herstellung des Bleches für ein Batteriegehäuse, bei dem eine Kohleschicht (16) auf der Oberfläche der Plattierungsschicht angebracht wird, durch Auftragen von Kohle auf die Oberfläche der Plattierungsschicht, nachdem die Plattierungsschicht aufgebracht worden ist.

## Revendications

1. Plaque de formation de boîtier de pile composé d'un acier plaqué ayant une plaque de base (2) et des placages (3, 4) sur les deux surfaces de la plaque de base, la plaque de base ayant une épaisseur de 0,01 mm à 0,7 mm; l'épaisseur du placage étant de 10 µm ou moins, et les métaux des placages étant différents du métal de la plaque de base et également différents l'un de l'autre.

2. Plaque de formation de boîtier de pile composé d'un acier plaqué ayant une plaque de base (2) et des placages (3, 4) sur les deux surfaces de la plaque de base, la plaque de base ayant une épaisseur de 0,01 mm à 0,7 mm; l'épaisseur du placage étant de 10 µm ou moins, et les métaux des placages étant différents du métal de la plaque de base mais identiques l'un à l'autre.

3. Plaque de formation de boîtier de pile composée d'un acier plaqué ayant une plaque de base (1) et un placage (3) sur la surface de la plaque de base et une couche plaquée (8) sur l'autre surface, la plaque de base ayant une épaisseur de 0,01 mm à 0,7 mm, l'épaisseur du placage étant de 10 µm ou moins, et le métal du placage étant différent du métal de la plaque de base.

4. Plaque de formation de boîtier de pile composée d'un acier plaqué ayant une plaque de base (1) et un placage (3) sur la surface de la plaque de base et une couche avec application de carbone (6) sur l'autre surface, la plaque de base ayant une épaisseur de 0,01 mm à 0,7 mm, l'épaisseur du placage étant de 10 µm ou moins, et le métal du placage étant différent du métal de la plaque de base.

5. Plaque de formation de boîtier de pile selon l'une quelconque des revendications 1 à 4, qui a une couche plaquée (8) sur au moins une surface du placage (3).

6. Plaque de formation de boîtier de pile selon l'une quelconque des revendications 1 à 5, qui a une couche avec application de carbone (6) sur au moins une surface du placage (3).

7. Plaque de formation de boîtier de pile selon la revendication 3 ou 5, ayant une couche avec application de carbone (6) sur au moins une surface de la couche plaquée (8).

8. Plaque de formation de boîtier de pile selon l'une quelconque des revendications 1 à 7, dans laquelle le placage (3, 4) se compose de nickel, d'alliage de nickel, de cuivre, d'alliage de cuivre, d'argent, d'or ou de titane.

9. Plaque de formation de boîtier de pile selon la revendication 8, dans laquelle, pendant un processus de formage d'un boîtier de pile (20), le placage (3) est positionné sur une surface extérieure de la pile et peut se composer de nickel, et le placage (4) est positionné sur une surface intérieure de la pile et peut se composer d'alliage de nickel.

10. Plaque de formation de boîtier de pile selon l'une quelconque des revendications 3, 5, 6, 7, 8 et 9, dans laquelle la couche plaquée (8) se compose d'un métal choisi parmi Au, Ag, Mo, Co, Ir, Rh, W et Zn ayant chacun une résistance de contact faible.

11. Plaque de formation de boîtier de pile selon l'une quelconque des revendications 3, 5, 6, 7, 8 et 9, dans laquelle la couche plaquée (8) se compose d'un métal choisi parmi C, Co et Pd pas facilement oxydé; et/ou un alliage choisi parmi Ni-C, Ni-Mn, Ni-Co, Ni-B, Ni-Fe, Ni-Sn, Ni-Zn, Ni-Si, Ni-In, Ni-Ge, Ni-Se, Ni-La, Ni-W, Ni-Ti, Ni-P, Ni-Mo, Ni-Ga, Co-Mo, Fe-W, et Ag-Sn pas facilement oxydé.

12. Boîtier de pile fabriqué dans la plaque de formation de boîtier de pile selon l'une quelconque des revendications 1 à 11.

13. Procédé de fabrication d'une plaque de base de pile (1) comportant les étapes consistant à :
- stratifier un placage (3, 4; 11, 12) avec une épaisseur de 1 mm à 5 mm se composant d'un métal différent du métal d'une barre de coulée continue (10) sur au moins une surface de la barre ayant une épaisseur de 200 mm à 300 mm;
- laminer à chaud et étirer la barre laminée avec le placage afin de réduire la largeur de celle-ci de 10 % ou moins;
- enrouler la barre stratifiée avec le placage alors que les deux bords latéraux sont chauffés; et
- laminer à froid la barre stratifiée avec le placage, de sorte qu'un acier plaqué composé d'une plaque de base fabriquée dans la barre ayant une épaisseur de 0,01 mm à 0,7 mm et du placage ayant une épaisseur de 10 µm ou moins est fabriqué.

14. Procédé de fabrication d'une plaque de base de pile (1) comportant les étapes consistant à :
- prévoir deux plaques stratifiées (100; 100') en stratifiant des placages (11, 12) se composant d'un métal différent du métal d'une barre de coulée continue (10) sur au moins une surface de la barre;
- appliquer une matière de séparation (15; 16) entre les placages (11, 12) des plaques stratifiées;
- laminer à chaud les plaques stratifiées à un rapport prédéterminé;
- laminer à froid les plaques stratifiées à un rapport prédéterminé; et
- séparer les plaques stratifiées l'une de l'autre au niveau de la partie de matière de séparation,
- de sorte qu'un acier plaqué composé d'une plaque de base se composant de la barre et ayant une épaisseur de 0,01 mm à 0,7 mm et du placage ayant une épaisseur de 10 µm ou moins est fabriqué.

15. Procédé de fabrication d'une plaque de base de pile (1) selon la revendication 14, dans lequel les placages (11, 12) sont stratifiés sur les deux surfaces de la barre (10), et la matière de séparation est de la poudre de carbone, de sorte qu'un acier plaqué composé de la plaque de base (10), des placages (11, 12) prévus sur chaque surface de la plaque de base, et des poudres de carbone (16) appliquées sur la surface d'un des placages est fabriqué.

16. Procédé de fabrication d'une plaque de base de pile (1) comportant les étapes consistant à :
- prévoir deux plaques stratifiées (100; 100') en stratifiant un placage (11, 12) se composant d'un métal différent du métal d'une barre de coulée continue (10) sur au moins une surface de la barre;
- appliquer des poudres de carbone (15; 16) entre les plaques de base (10) des plaques stratifiées;
- laminer à chaud les plaques stratifiées à un rapport prédéterminé;
- laminer à froid les plaques stratifiées à un rapport prédéterminé; et
- séparer les plaques stratifiées l'une de l'autre au niveau de la partie de matière de séparation,
- de sorte qu'un acier plaqué composé d'une plaque de base (10) se composant de la barre et ayant une épaisseur de 0,01 mm à 0,7 mm, du placage (11) sur une surface de la plaque de base et ayant une épaisseur de 10 µm ou moins et des poudres de carbone (16) appliquées sur l'autre surface de la plaque de base, est fabriqué.

17. Procédé de fabrication de la plaque de formation de boîtier de pile selon l'une quelconque des revendications 13 à 16, dans lequel une couche plaquée (8) est déposée sur la surface du placage (11, 12) ou/et la surface de la plaque de base (10) par dépôt une fois que les plaques stratifiées sont laminées à froid.

18. Procédé de fabrication de la plaque de formation de boîtier de pile selon la revendication 17, dans lequel une couche de carbone (6) est déposée sur la surface de la couche plaquée (8) en appliquant du carbone sur la surface de la couche revêtue une fois que la couche revêtue est déposée.
